# EUROPÄISCHE PATENTANMELDUNG

(11) **EP 0 845 765 A1**
(43) Veröffentlichungstag der Anmeldung: **03.06.1998**
(21) Anmeldenummer: 96119272.1
(22) Anmeldetag: 02.12.1996
(51) Int. Cl.: G08B 13/187, G01S 17/87

(54) **Einbruchmeldersystem**

(71) Anmelder: CERBERUS AG, CH-8708 Männedorf (CH)
(72) Erfinder: Kunz, Peter, 8625 Gossau ZH (CH); Mahler, Hansjürg Dr., 8634 Hombrechtikon (CH)

(57) **Zusammenfassung**

Ein Einbruchmeldersystem zur Überwachung eines Durchgangs (1) zu einem Raum (2) mit vergrössertem Detektionsbereich und/oder erhöhter Fehlalarmsicherheit enthält zwei aktive Infrarotmelder (3, 4), deren Lichtquellen Licht in einen Vorhang-ähnlichen Flächenbereich aussenden und deren Empfänger reflektiertes Licht von sich bewegenden Personen oder Objekten detektieren. Die Melder (3, 4) sind an entgegengesetzten Seiten des Durchgangs (1) angeordnet, sodass ihre Gesichtsfelder einander gegenüberstehen und ihre Detektionsbereiche einander überlappen oder zumindest berühren, und/oder sie sind an der gleichen Seite des Durchgangs (1) angeordnet, sodass ihre Detektionsbereiche parallel zum Durchgang (1) und getrennt voneinander verlaufen. Im ersten Fall gibt das Einbruchmeldersystem einen Alarm, wenn mindestens einer der beiden Melder (3, 4) ein Reflexionssignals detektiert. Im zweiten Fall wird ein Alarm nur dann ausgelöst, wenn beide Infrarotmelder (3, 4) ein Reflexionssignal empfangen. In einem weiteren Einbruchmeldersystem ist ein aktiver Infrarotmelder zur Volumenüberwachung ausgestaltet und mit einem passiven Infrarotmelder, einem zweiten aktiven Infrarotmelder, einem Mikrowellen- oder einem Ultraschallmelder kombiniert.

## Beschreibung

Die Erfindung betrifft ein Einbruchmeldersystem mit einem oder mehreren aktiven Infrarotmeldern sowie aktiven Infrarotmeldern in Verbindung mit Einbruchmeldern anderer Art wie passiven Infrarotmeldern, Ultraschall- oder Mikrowellenmeldern.

Aktive Infrarotmelder werden im allgemeinen zur Detektion und Meldung von Bewegungen in einem zu überwachenden Raum oder Behälter eingesetzt. Dabei handelt es sich um Bewegungen von Personen oder anderen Lebewesen handeln, die Körperstrahlung von sich geben, sowie auch von Objekten wie Werkzeuge und dergleichen, die bei einem Einbruch verwendet werden. Die aktiven Infrarotmelder unterscheiden sich also von bekannten passiven Infrarotmeldern darin, dass sie Bewegungen nicht nur von warmen Körpern, sondern auch von kalten Objekten detektieren, die keine Wärmestrahlung abgeben. Passive Infrarotmelder andererseits detektieren Bewegungen durch den Empfang von Wärmestrahlung im weiteren Infrarotbereich und sind auf Bewegungen kalter Körper unempfindlich. Sie können also leicht überlistet werden, indem ein Einbruch durch "Fischen" nach dem Diebstahlgut mittels Werkzeugen verübt wird, der von einem passiven Infrarotdetektor nicht detektiert wird. Aktive Infrarotmelder haben im Vergleich den Vorteil, dass sie Einbrüche dieser Art aufgrund ihres Funktionsprinzips detektieren können.

Das Prinzip eines aktiven Infrarotmelders beruht auf dem aktiven Aussenden von unsichtbarem Licht in den zu überwachenden Raum und der Detektion und Auswertung der Reflexion dieses Lichts von sich bewegenden Körpern. Ein aktiver Infrarotmelder besteht grundsätzlich aus einer Lichtquelle, die Licht in, nahen infraroten Wellenlängenbereich in den zu überwachenden Raum aussendet, und einem Lichtempfänger, der in diesem Raum reflektiertes Licht dieser Quelle detektiert und nach vorgegebenen zeitlichen Kriterien auswertet. Dabei sind die Schaltungen zur Ansteuerung der Lichtquelle und Auswertung des Empfängersignals so miteinander synchronisiert, dass nur jenes detektierte Licht, das von sich bewegenden Objekten oder Personen reflektiert wird, eine Einbruchmeldung auslöst. Anderes auf den Empfänger fallendes Licht, das von Lichtquellen wie Sonne oder Lampen stammt oder von stationären Objekten reflektiert wird, wird lediglich als Untergrundsignal gewertet. Dies wird häufig durch das Pulsen der Lichtquelle und einer entsprechenden Schaltung realisiert, die nur während der Pulszeit einfallendes Licht auswertet. Allgemein sind Melder dieser Art mit einer Alarmzentrale verbunden, der Alarm- und Störsignale zugeführt werden.

Durch die Messung von reflektiertem Licht ist es dem aktiven Infrarotmelder auch möglich, eine Maskierung des Melders durch Abdecken des Meldergehäuses zu detektieren und zu melden. Passive Infrarotmelder hingegen können durch Maskierung unempfindlich gemacht werden sofern sie nicht über eine spezielle aktive Überwachung des Meldergehäuses und der nächsten Umgebung verfügen. Der aktive Infrarotmelder hat also im Vergleich zum passiven Infrarotmelder den Vorteil, dass er Maskierungen inherent detektiert.

Aktive Infrarotmelder unterscheiden sich von bekannten Lichtschranken, indem der Infrarotmelder in einem einzigen Gehäuse untergebracht ist. Bei einer Lichtschranke wird eine Punkt-zu-Punkt-Messung ausgeführt, wofür Sender und Empfänger bei der Installation des Systems optisch genau ausgerichtet werden müssen. Bei einein aktiven Infrarotmelder hingegen ist eine solche Ausrichtung nicht notwendig, da Sender und Empfänger bei der Montage im Werk bereits justiert werden oder durch Verwendung einer gemeinsamen Optik für Sender und Empfänger eine Justierung wegfällt.

Bei bekannten aktiven Infrarotmeldern, wie zum Beispiel in DE 36 28 817 beschrieben, wird das Licht durch eine Optik in einer Art Vorhang ausgesandt. Der "Lichtvorhang" wird beispielsweise für die Überwachung einer Schaufensterfront oder eines Durchgangs verwendet. Der Detektionsbereich dieser Melder ist jeweils durch den Raum bestimmt, der von der Lichtquelle bestrahlt wird. In obengenannten Dokument ist die Auswertung des Infrarotmelders mit der eines Geräuschmelders für die Detektion von Glasbrüchen verbunden. In jenem System wird nur dann ein Alarm abgegeben, wenn der Detektion durch den Infrarotmelder ein Glasbruch vorangegangen ist. Das System ist dadurch auf die Anwendung bei einer Fensterfront begrenzt.

In WO 95/33248 ist ein aktiver Infrarotmelder dieser Art beschrieben, dessen Auswerteschaltung einen Regler enthält, der eine Kompensation von störender Fremdstrahlung bewirkt, sodass die Empfindlichkeit auf reflektierte Strahlung während der Pulszeiten stets maximal ist. Ausserdem enthält der Melder eine gemeinsame Optik für Sender und Empfänger, die der Bündelung des ausgesandten Strahls und zugleich dem Empfang und der Fokussierung der reflektierten Strahlung dient, sodass eine korrekte Ausrichtung der Gesichtsfelder gewährleistet ist. Die Empfindlichkeit des Melders ist durch den Regler optimiert, ist aber begrenzt durch den kleinsten Photostrom im Empfänger, der mit einer kostengünstigen Schaltung für kommerzielle Melder auswertbar ist. Die Intensität des Lichts, das den Empfänger erreicht, fällt mit den, Quadrat der von, Licht zurückgelegten Distanz zum reflektierenden Objekt und zurück zum Empfänger. Ein typischer Detektionsbereich eines aktiven Infrarotmelders dieser Art ist ca. 6 m lang. Licht, das von Objekten in grösserer Entfernung vom Melder reflektiert wird, besitzt zu wenig Intensität, uni sicher detektiert und ausgewertet zu werden. Es besteht bei aktiven Infrarotmeldern auch die Möglichkeit von Fehlalarmen, die durch nahe am Melder vorbeifliegende Insekten verursacht werden. Es handelt sich hier um sich bewegende Körper, die durch ihre relativ tiefe Temperatur und kleine Grösse wenig Wärmestrahlung abgeben und bei einem passiven Infrarotmelder kein Fehlalarmproblem darstellen, aber bei einem aktiven Infrarotmelder durch ihre Lichtreflexion einen Alarm auslösen können.

Es ist aufgrund dieses Standes der Technik der Erfindung die Aufgabe gestellt, ein Einbruchmeldersystem zur Überwachung eines Raums oder eines Durchgangs zu einem Raum mit einem oder mehreren aktiven Infrarotmeldern zu schaffen, das über einen grösseren Detektionsbereich und/oder eine erhöhte Fehlalarmsicherheit verfügt. Insbesondere soll das Meldersystem sich bewegende warnie Personen und Lebewesen sowie Objekte, die keine Wärmestrahlung abgeben, im Vergleich zu bekannten aktiven Infrarotmeldern aus einen, grösseren Raumbereich detektieren und/oder über eine erhöhte Fehlalarmsicherheit verfügen, indem es vorbeifliegende Insekten von echten Einbrechern und Werkzeugen unterscheidet.

Eine erste Lösung der Aufgabe besteht aus einem Einbruchmeldersystem mit zwei aktiven Infrarotmeldern, deren Detektionsbereiche sich ähnlich einem Vorhang in den zu überwachenden Raum erstrecken und in dem Raum in einer ersten Anordnung an entgegengesetzten Wänden oder in einer zweiten Anordnung nebeneinander in kleinen, Abstand an der gleichen Wand angeordnet sind. In der ersten dieser beiden Anordnungen stehen die Gesichtsfelder der Melder einander gegenüber, sodass ihre Detektionsbereiche einander zumindest berühren oder überlappen. Die Reichweite des Meldersystems ist dadurch bis auf das Doppelte vergrössert. Bei dieser Anordnung wird dann ein Alarm ausgelöst, wenn mindestens einer der beiden Melder ein Lichtsignal, das von einem sich bewegenden Körper reflektiert worden ist, empfangen hat. Alternativ wird die Distanz zwischen den Meldern so gewählt, dass die Detektionsbereiche für die kleinsten zu detektierenden Objekt, wie zum Beispiel ein Werkzeug, einander berühren, die Detektionsbereiche für kleinere Objekte jedoch getrennt voneinander sind.

In der zweiten Anordnung stehen die Gesichtsfelder der einzelnen Infrarotmelder parallel und getrennt voneinander. Ein Alarm wird bei dieser Anordnung dann ausgelöst, wenn beide Melder ein reflektiertes Lichtsignal empfangen haben. Bewegt sich beispielsweise ein Insekt im Detektionsbereich des einen Melders, verursacht es bei diesem ein Reflexionssignal. Der zweite Melder empfängt jedoch kein Signal, da das Insekt durch seine kleine Grösse zu einem gegebenen Zeitpunkt nur in einem der beiden Detektionsbereiche sich aufhalten kann. Bewegt sich andererseits ein grösserer Körper in, Detektionsbereich des einen Melders so durchquert dieser durch seine Grösse auch den Detektionsbereich des zweiten Melders, sodass beide Melder ein Reflexionssignal empfangen und ein Alarm ausgelöst wird.

In obengenannter Lösung sind die Vorhang-ähnlichen Detektionsbereiche der einzelnen aktiven Infrarotmelder senkrecht zum Raumboden ausgerichtet. Diese Anordnung wird insbesondere für die Überwachung von Durchgängen wie Fenster oder Türen oder von Schaufensterfronten verwendet. In einer weiteren Verwendung dieser Lösung sind die Vorhang-ähnlichen Detektionsbereiche parallel zum Raumboden, ähnlich einem fliegenden Teppich, ausgerichtet. Der Infrarotmelder hat in dieser Ausführung als Präsenzmonitor in Verbindung mit der Steuerung von Beleuchtung- oder Lüftungsanlagen eine Verwendung. Hierfür wird der Detektionsbereich beispielsweise auf Hüfthöhe einer Person oder tiefer eingerichtet, sodass Personen im Raum den Detektionsbereich auf jeden Fall durchqueren und ein Signal auslösen.

Eine zweite Lösung der Aufgabe, den Detektionsbereich zu vergrössern, besteht aus einem Einbruchmeldersystem mit einem aktiven Infrarotmelder, dessen Detektionsbereich ein Volumen ausfüllt, indem der aktive Infrarotmelder entweder das aktive Lichtsignal ähnlich einer Lambertstrahlung aussendet oder der Melder über eine Optik verfügt, die das Lichtsignal in ein vorbestimmtes Volumen aussendet.

In einer weiteren Lösung der Aufgabe, den Detektionsbereich zu vergrössern und die Fehlalarmsicherheit des Meldersystems zu erhöhen, enthält das Einbruchmeldersystem einen aktiven Infrarotmelder der oben genannten Art und einen passiven Infrarotmelder, der im Detektionsbereich des aktiven Infrarotmelders liegt. In diesen, Meldersystem ergänzt jeweils die Funktion des einen Meldertyps jene des zweiten Meldertyps, indem der aktive Infrarotmelder den passiven Melder auf Sabotage durch Maskierung überwacht und der passive Infrarotmelder Fehlalarme des aktiven Infrarotmelders durch vorbeifliegende Insekten verhindert.

In weiteren Ausführungen enthält das obengenannte Einbruchmeldersystem anstelle eines passiven Infrarotmelders einen Mikrowellenmelder oder einen Ultraschallmelder. Hier haben der Mikrowellenmelder oder der Ultraschallmelder dieselbe ergänzende Wirkung wie der passive Infrarotmelder. Dieses System besitzt den zusätzlichen Vorteil, dass der Detektionsbereich des Systems durch den aktiven Infrarotmelder klar definiert wird. Beim Einsatz eines einzelnen Mikrowellen- oder Ultraschallmelders ist der Detektionsbereich unscharf definiert, was bei den einen Anwendungen Schwierigkeiten mit der Fehlalarmsicherheit bereiten kann.

Anhand der folgenden Figuren sind die Ausführungen der Erfindung näher erläutert.

Figur 1 a) und b) zeigen Anordnungen von zwei aktiven Infrarotmeldern mit Vorhangähnlichen Detektionsbereichen vor einem überwachten Durchgang.

Figur 2 zeigt einen aktiven Infrarotmelder in der Verwendung als Präsenzmonitor.

Figur 3 a) und b) zeigen Anordnungen eines aktiven Infrarotmelders für die Volumenüberwachung eines Raumes.

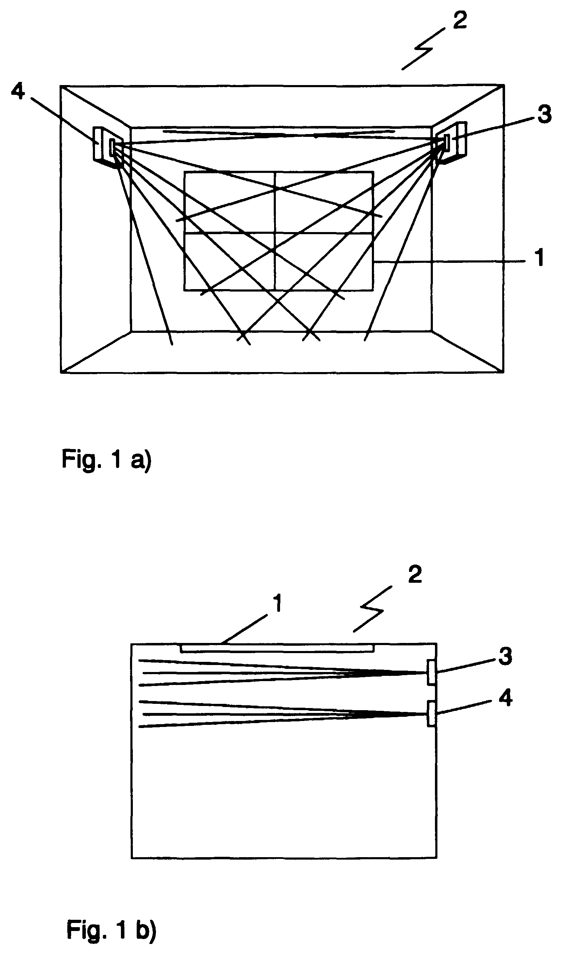

In Figur 1 wird ein Durchgang 1, hier die Fensterfront 1 eines Raumes 2 durch zwei aktive Infrarotmelder 3 und 4 überwacht. Diese enthalten je eine aktive Lichtquelle und einen Empfänger mit Auswerteelektronik. Die Detektionsbereiche sind mit den Strahlengängen des ausgesandten Lichts angedeutet und sind einem Vorhang ähnlich, indem die Abstrahlung des aktiven Lichtsignals durch eine entsprechende Zylinderoptik gebildet flächenförmig parallel zur Fensterfront 1 sich ausbreitet. Die Melder sind in Figur 1 a) einander gegenüber angeordnet sodass ihre Detektionsbereiche einander an ihren Grenzen berühren oder vorzugsweise leicht überlappen. Der Detektionsbereich des Meldersystems ist dadurch im Vergleich zu dem eines einzelnen Melders vergrössert, sodass ein Raum von einer Grösse von mehr als einem Detektionsbereich eines einzelnen Melders überwacht werden kann. Wird die Reflexion von einem kleinen sich bewegenden Körper vom einen Melder als zu schwaches Signal empfangen, um einen Alarm auszulösen, erreicht das Reflexionssignal jedoch den Empfänger des zweiten Melders. Ein Alarm wird beim Empfang eines Reflexionssignals durch einen oder beide Melder im System ausgelöst. Zur Senkung der Leistungsaufnahme des Systems, werden in diesem Meldersystem die Lichtquellen beispielsweise abwechslungsweise gepulst. Das Meldersystem enthält bei einem der Melder die Auswerteelektronik in einfacher Ausführung, der das verstärkte Reflexionssignal des zweiten Melders zugeführt wird. Empfangene Lichtsignale werden wiederum nur dann als Reflexionssignale gewertet, sofern sie während der Pulszeit der beiden Melder detektiert worden sind. Ein Meldersystem dieser Art kann auch zwecks weiterer Vergrösserung des Detektionsbereichs mit mehr als zwei aktiven Infrarotmeldern ausgebildet werden.

Beim Detektionsbereich der oben erwähnten Ausführung handelt es sich um den Detektionsbereich, in dem auch kleine Objekte wie Falter und Insekten detektiert werden. Die Melder sind in einer weiteren Ausführung gemäss des Detektionsbereichs für die kleinsten zu detektierenden Objekte angeordnet. Diese sind zum Beispiel der Arm eines Menschen oder eine Taschenlampe oder ein anderes Werkzeug. Der Detektionsbereich solcher kleinster zu detektierende Objekte ist grösser als der von Insekten. In dieser Ausführung ist die Distanz zwischen den Meldern so gewählt, dass die Detektionsbereiche für diese kleinsten zu detektierenden Objekte einander berühren, die Detektionsbereiche für Insekten aber in der Mitte des Raumes getrennt voneinander sind. Ein Insekt, das sich in der Mitte des Raums befindet, wird dann von keinen, der beiden Melder detektiert. Eine solche Anordnung erlaubt im Vergleich zur ersten Ausführung eine weitere Vergrösserung des Überwachungsraums. Die Distanz zwischen den Meldern wird je nach Anwendung, und je nach Grösse und Art der zu detektierenden Objekte gewählt.

Figur 1 b) zeigt in einer Draufsicht eine Fensterfront 1 in einem Raum 2 mit zwei aktiven Infrarotmeldern 3 und 4, die an derselben Seite des Raumes angeordnet, sodass ihre Detektionsbereiche parallel zur Fensterfront 1 und parallel zueinander liegen. Die Detektionsbereiche, der beiden Melder überlappen einander dabei nicht, sondern der Abstand der beiden Bereiche ist jeweils gemäss der kleinsten Grösse eines zu detektierenden Körpers bestimmt Ein Einbruch durch eine Person oder durch ein Werkzeug wird detektiert und durch einen Alarm gemeldet, wenn Reflexionssignale von beiden Meldern 3 und 4 empfangen werden. Empfängt nur einer der beiden Melder ein Reflexionssignal handelt es sich um ein sehr kleines Objekt, das nicht zugleich in beiden Detektionsbereichen liegt und als Insekt oder dergleichen gewertet wird.

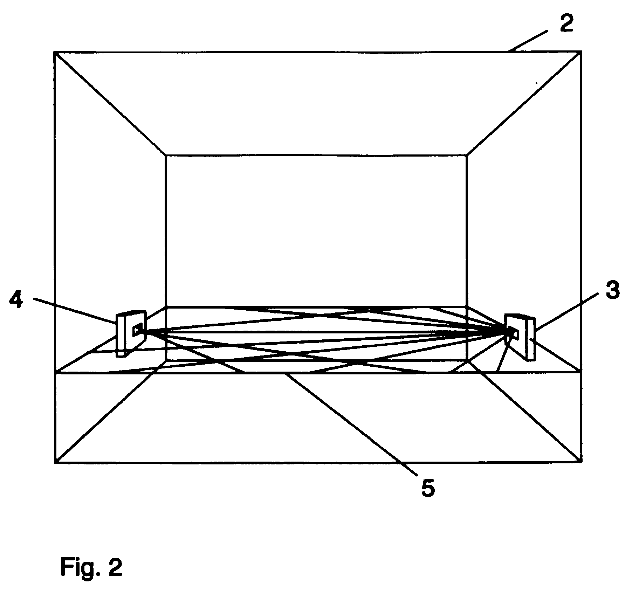

Figur 2 zeigt einen Raum 2 mit zwei aktiven Infrarotmelder 3 und 4 in der Verwendung als Präsenzmonitor für stehende oder sitzende Personen. Die aktiven Infrarotmelder 3, 4, deren Lichtquellen ihr Licht flächenförmig aussenden, sind an gegenüberliegenden Wänden in Hüfthöhe montiert. Die Detektionsbereiche der Infrarotmelder 3 und 4 erstrecken sich ähnlich einem fliegenden Teppich 5 horizontal durch den Raum 2. Personen, die ihn durchqueren, oder sich sitzend aufhalten, verursachen ein Reflexionssignal, das im Empfänger ein Signal auslöst, das der Ansteuerung von weiteren Systemen wie Beleuchtung, Lüftung, Heizung usw. zugeführt wird. Diese Ausführung auch mit den Meldersystemen von Figur 1 kombiniert werden.

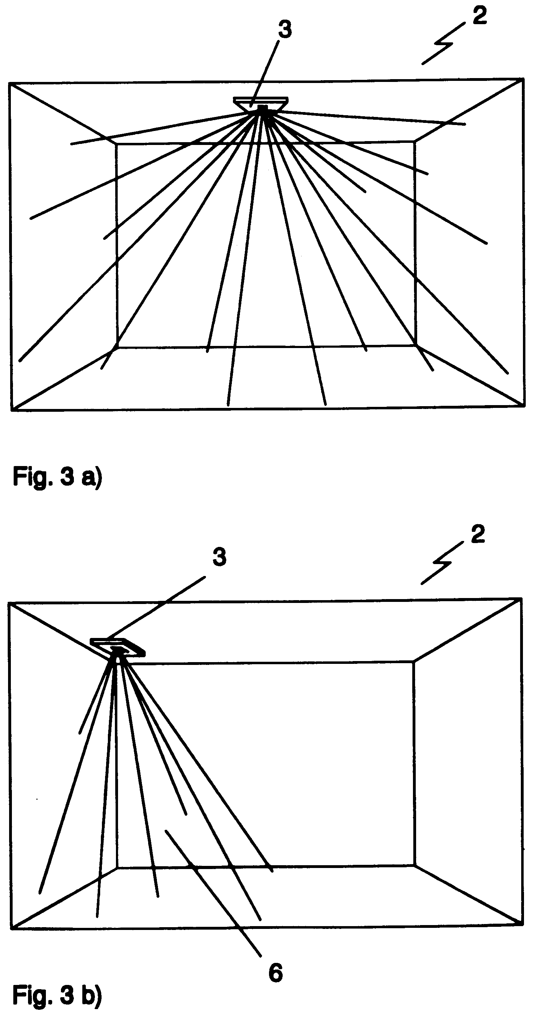

Figur 3 zeigt einen Raum 2, der durch einen an der Raumdecke montierten aktiven Infrarotmelder 3 überwacht wird. Der Melder 3 ist beispielsweise an der Decke oder in einer Ecke des Raumes 2 montiert. Die Lichtquelle des Melders 3 sendet Licht ähnlich einem Lambertstrahler in den Raum 2. Das Licht wird hierzu wie in Figur 3 a) ohne Optik in den Raum gesandt, um den gesamten Raum zu überwachen. In Figur 3 b) wird gemäss einer weiteren Ausführung das Licht über eine Optik in ein Volumen 6 mit spezieller Geometrie gesandt. Dies kann auch mit Hilfe einer entsprechenden Apertur geschehen. Bei den, Volumen 6 handelt es sich zum Beispiel um einen Raum mit spezieller Geometrie oder um einen Teil eines Raums, der überwacht werden soll, während ein weiterer Teil desselben Raums unbewacht bleiben soll, sodass sich Personen dort aufhalten oder Objekte sich bewegen können, ohne einen Alarm auszulösen. Dies kann zum Beispiel in einem Museum verwendet werden.

Diese Volumenüberwachung ist auch für eine kombinierte Überwachung durch aktives Infrarotlicht zusammen mit Mikrowellen- oder Ultraschallmeldern geeignet. Eine Kombination dieser Art hat den Vorteil, dass der Detektionsbereich eines solchen Meldersystems durch den Detektionsbereich des aktiven Infrarotmelders begrenzt wird. Die Detektionsbereiche von Ultraschall- und Mikrowellenmeldern sind unscharf begrenzt. In einigen Anwendungen ist jedoch eine scharfe Begrenzung erwünscht, um Fehlalarme zu vermeiden, die durch erlaubte Bewegungen in den Randgebieten des Detektionsbereichs verursacht werden. Eine Kombination eines solchen Melders mit einem aktiven Infrarotmelder erbringt diese erwünschte Begrenzung. Andererseits wirkt ein Mikrowellen- oder Ultraschallmelder in einem solchen Meldersystem ergänzend, indem Fehlalarme des aktiven Infrarotmelders, die durch ein Insekt verursacht werden, vermieden werden und nur dann ein Alarm ausgelöst wird, wenn beide Meldertypen ein Signal empfangen haben.

In einer weiteren Ausführung einer Überwachung eines Raumes wie in Figur 3 erfolgt durch zwei oder mehr aktive Infrarotmelder, die je in einer Ecke des Raumes montiert sind. Die Wirkung ihrer Kombination ist ähnlich der von Figur 1 a), indem der Detektionsbereich des Meldersystems im Vergleich zu den, eines einzelnen Melders vergrössert ist und Fehlalarme durch Insekten vermieden werden.

## Patentansprüche

1. Einbruchmeldersystem zur Überwachung eines Durchgangs (1) zu einem Raum (2), gekennzeichnet durch zwei aktive Infrarotmelder (3, 4) mit je einer Lichtquelle, die Licht in einen Vorhang-ähnlichen Flächenbereich senden und einem Lichtempfänger zur Detektion von reflektiertem Licht aus dem bestrahlten Raum (2), wobei die zwei aktiven Infrarotmelder (3, 4) an entgegengesetzten Seiten des Durchgangs (1) angeordnet sind, sodass ihre Detektionsbereiche einander überlappen oder zumindest berühren, und das Meldersystem einen Alarm abgibt, wenn mindestens einer der beiden aktiven Infrarotmelder (3, 4) ein Reflexionssignal empfängt, und/oder die zwei aktiven Infrarotmelder (3, 4) an derselben Seite des Durchgangs (1) angeordnet sind und ihre Detektionsbereiche parallel und getrennt voneinander verlaufen und das Meldersystem einen Alarm abgibt, wenn beide Melder (3, 4) gleichzeitig ein Reflexionssignal empfangen.

2. Einbruchmeldersystem nach Patentanspruch 1, gekennzeichnet durch einen Detektionsbereich, in dem die kleinsten zu detektierenden Objekte detektiert werden.

3. Einbruchmeldersystem zur Überwachung eines Raumes (2) mit einem aktiven Infrarotmelder (3) mit einer Lichtquelle, die Licht in den zu überwachen Raum aussendet und einem Empfänger, der reflektiertes Licht aus dem überwachten Raum detektiert, dadurch gekennzeichnet dass der aktive Infrarotmelder (3) an der Raumdecke angeordnet ist und die Lichtquelle Infrarotstrahlung ähnlich einem Lambertstrahler in den Raum aussendet.

4. Einbruchmeldersystem nach Patentanspruch 3, dadurch gekennzeichnet, dass der aktive Infrarotmelder (3) Licht mittels einer Optik in ein Volumen (6) von vorgegebener Geometrie aussendet.

5. Einbruchmeldersystem nach den Patentansprüchen 3 oder 4, dadurch gekennzeichnet, dass das Einbruchmeldersystem zusätzlich einen passiven Infrarotmelder enthält.

6. Einbruchmeldersystem nach den Patentansprüchen 3 oder 4, dadurch gekennzeichnet, dass das Einbruchmeldersystem zusätzlich einen Mikrowellenmelder enthält.

7. Einbruchmeldersystem nach den Patentansprüchen 3 oder 4, dadurch gekennzeichnet, dass das Einbruchmeldersystem zusätzlich einen Ultraschallmelder enthält.

8. Einbruchmeldersystem nach den Patentansprüchen 3 oder 4, dadurch gekennzeichnet, dass das Einbruchmeldersystem zusätzlich einen weiteren aktiven Infrarotmelder enthält.

9. Verwendung eines Einbruchmeldersystems nach den Patentansprüchen 1 bis 8 als Präsenzmonitor.
